(19) Europäisches Patentamt
European Patent Office
Office européen des brevets

(11) Publication number: 0 119 358 B1

(12) EUROPEAN PATENT SPECIFICATION

(45) Date of publication of patent specification: 23.09.87

(51) Int. Cl.$^4$: B 30 B 1/04

(21) Application number: 83307843.9

(22) Date of filing: 21.12.83

# (54) Press force multiplier.

(30) Priority: 23.12.82 JP 234788/82
29.11.83 JP 226200/83

(43) Date of publication of application:
26.09.84 Bulletin 84/39

(45) Publication of the grant of the patent:
23.09.87 Bulletin 87/39

(84) Designated Contracting States:
CH DE FR GB IT LI SE

(56) References cited:
GB-A-1 539 829
US-A-4 291 618

Getriebelehre, O. Kraemer, Verlag G. Braun, Karlsruhe (1966), page 213

(73) Proprietor: Sato, Shichiro
15-11, Shimooichi Higashimachi
Nishinomiya-shi Hyogo-ken (JP)

(72) Inventor: Sato, Shichiro
15-11, Shimooichi Higashimachi
Nishinomiya-shi Hyogo-ken (JP)

(74) Representative: Ford, Michael Frederick et al
MEWBURN ELLIS & CO. 2/3 Cursitor Street
London EC4A 1BQ (GB)

EP 0 119 358 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a press incorporating a mechanical force multiplier for multiplying a driving force applied on a driving lever and for transmitting the force multiplied to a driven lever to generate a high press force on a follower of the driven lever.

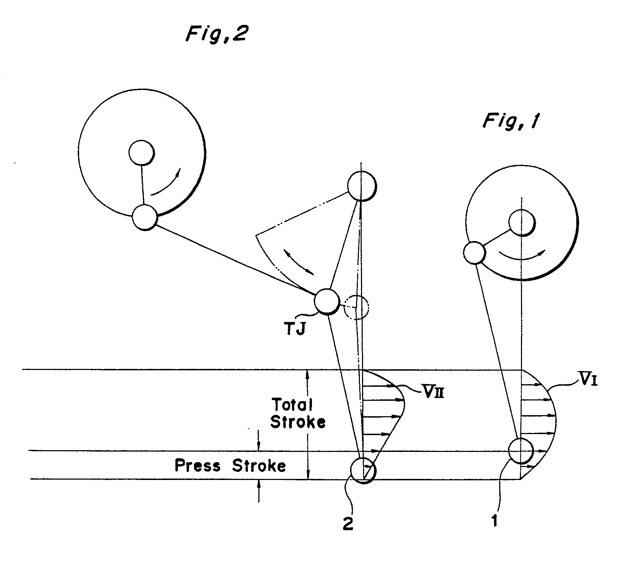

As shown schematically in Figs. 1 and 2, a crank-pin mechanism and a toggle-joint mechanism are used conventionally as a drive mechanism for the auto-drive press having a motor for generating a driving force.

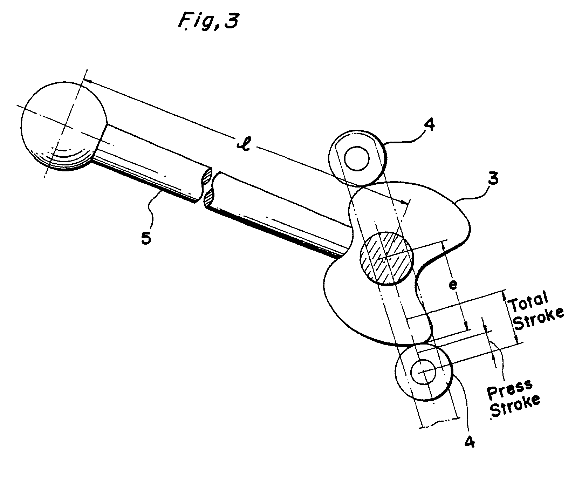

Moreover, a cam mechanism as shown in Fig. 3 is also employed conventionally in a hand-operated press.

As is well known to those skilled in the art, the output force P of a slider cooperating with the driven lever is inversely proportional to the velocity V thereof: $P \cdot V = K$ (wherein K is a constant proportional to an energy applied exteriorly).

In this connection, the velocity of the slider 1 of the press with a crank-pin mechanism varies in a manner generally depicting a sine curve as shown by a velocity distribution $V_I$ in Fig. 1 and, therefore, the velocity remains relatively high even during the press stroke of the slider. For this reason, only a relatively low output is obtained. Moreover, large noises and oscillations are generated as the tool mounted on the slider strikes a work at a relatively high velocity. These lower a working accuracy of the work and shorten the life of the tool.

As is clear from the velocity distribution $V_{II}$ of the slider 2 of the press with the toggle-joint mechanism shown in Fig. 2, the velocity of the slider 2 at the time that the slider 2 is transferred to the press stroke thereof is low when compared with that of Fig. 1, but the ratio of reduction remains several tens% at most.

Also, in the hand-operated press with a cam mechanism shown in Fig. 3, it is difficult to make an eccentric distance e smaller than a limit, since a radius of the fundamental circle of the cam 3 is limited to a value determined by the strength of the cam needed. For example, since e is limited to 40 to 50 mm at least in the conventional hand-operated press, the maximum leverage ratio l/e obtained is at most 20 even though the length of the driving lever 5 is set to 800 mm (where l is the length of the driving lever).

As is clear from the foregoing, the driving mechanism of the conventional hand-operated press has a limit with respect to the leverage ratio obtained. Moreover, it is impossible to obtain a high capacity of the auto-press without increasing an exterior energy to be supplied by an electric motor or the like and without increasing the size of the press. For example, in a conventional crank press having a capacity of 100 tons, the capacity of the main driving motor needed is 10 HP (7.457 kW) and the size of the press becomes as large as 3,300 × 2,200 × 1,700 (mm$^3$). For these reasons, positions for the installation of the press are limited and it is difficult for every mechanic to be able to use the press when convenient according to his needs.

The book "Getriebelehre" by O. Kraemer published by Verlag G. Braun, Karlsruhe (1966) describes in Figure 428, page 213, a linkage for giving a variable speed, which must also give some enhancement of force. The linkage has a pivotally mounted driving member and a guide slot in the driving member so as to rotate with the driving member. This guide slot extends radially outwardly from an inner end which is spaced from the pivot axis of the driving member. A follower is arranged to run in the guide slot and a pivotally mounted driven member is connected to the follower with the distance from the pivot axis of the driven member to the centre of the connection between the follower and the driven member being substantially greater than the distance between the driven and driving pivot axes.

An object of the present invention is to provide a press comprising a force multiplier having an amazing leverage ratio, for instance, about ten times larger than that of conventional mechanical driving mechanisms:

A further object of the present invention is to provide a force multiplier in which the follower can be moved at extremely low velocity during the press stroke thereof and can be moved at high velocity during the remaining part of the stroke i.e. other than the press stroke.

According to the present invention, there is provided a press incorporating a force multiplier comprising:

a driving member pivotally mounted on a supporting structure,

a guide rotatable with the pivot of the driving member, and extending outwardly from the axis thereof,

a follower arranged to run on the guide,

a driven member pivotally mounted on the supporting structure, and connected to the follower, the distance from the pivot axis of the driven member to the centre of the connection between the follower and the driven member exceeding the distance between the driven and driving pivot axes such that when the driving member is driven through a predetermined angle, the follower is moved between a farthest position at which the follower is located farthest from the centre of pivot of the driving member and a nearest position at which the centre of the connection between the follower and the driven member is closest to the driving member's pivot axis, characterised in that the guide passes through the pivot axis of the driving member, and the distance from the pivot axis of the driven member to the centre of the connection between the follower and the driven member exceeds the distance between the driven and driving axes by a sufficiently small amount that as the follower approaches the nearest position, part of the follower running on the guide passes through the pivot axis of the driving member, and the driven member is decelerated rapidly as it approaches the nearest position.

The driven and driving members may in particular be levers.

According to one form of the present invention, the pivot of the driving lever has a portion elongated from the center thereof in at least one radial direction thereof by a distance larger than the stroke of the follower. In order to simplify mechanical structures, it is desirable to form said portion of the pivot of the driving lever as a circular disk having a larger radius than that of the pivot and being coaxial therewith and to support said circular disk rotatably on the frame as the pivot of the driving lever.

Moreover, mechanical structures can be further simplified if the guide means is formed as a groove or slit extending in the radial direction thereof (which is a longitudinal direction of the disk). In this embodiment of the present invention, the follower may be a pin or a square metal peg engaged in the groove or the slot. Use of a square metal peg is desirable in order to reduce wear of the guide means due to the sliding movement.

By virtue of the present invention, the center of the follower can approach the center of the pivot of the driving lever very closely, and then the leverage ratio can be increased to an extremely high value. This means, as is clearly understood from the relation $P \cdot V = K$ mentioned above, that the velocity of the follower is decelerated to a desirable low velocity as the center thereof approaches the center of pivot of the driving lever. Contrary to the above, when the follower moves away from the center of pivot of the driving lever by a suitable distance, the velocity of the follower is increased corresponding to the distance from the center of pivot of the driving center. Accordingly, the follower can be moved at high velocity except during the press stroke thereof.

Advantages which can be obtained when the force multiplier is applied to a press machine are as follows:

(a) The capacity of the press can readily be increased by ten times or more, as is obtained easily when compared with a conventional crank press having the same driving source.

(b) Conversely, the press according to the present invention needs only a very small driving force (input) to obtain the same output as that of a conventional press. This means that the press according to the present invention can be reduced in its volume and/or in its weight considerably.

(c) Moreover, the follower has a very good velocity distribution. It can have a high velocity during the part of the up-down stroke when it is not pressing the work and, contrary to the above, can have very low velocity during the press stroke against the work. Consequently noise and/or oscillation upon the contact of the tool on the work can be reduced or avoided, more accurate working is possible and the life of the tool can be prolonged.

(d) Further, it is possible to press, shear or squeeze a thick steel plate or the like, since it is possible to increase the press stroke with a very low velocity.

The present invention will now be further explained, and an embodiment described, by way of example only, with reference to the accompanying drawings in which:

Fig. 1 and Fig. 2 are schematic drawings showing driving mechanisms employed in the conventional presses, respectively;

Fig. 3 is a schematic elevational view showing a cam mechanism employed in the conventional hand-operated press;

Fig. 4 and Fig. 5 are plan views of driving and driven levers used in a force multiplier embodying to the present invention, respectively;

Fig. 6 is a view showing an essential structure of a force multiplier embodying to the present invention;

Fig. 7 and Fig. 8 are graphs showing velocity distribution of the follower obtained respectively in the embodiment of the present invention and the conventional toggle-joint mechanism;

Fig. 9 is a perspective view showing a hand-operated press in which a force multiplier embodying to the present invention is used;

Fig. 10 is an enlarged side view of part of the hand-operated press shown in Fig. 9;

Fig. 11 and Fig. 12 are a right-hand side view and a front view, respectively, for showing interior structures of an auto-press in which a force multiplier embodying the present invention is used;

Fig. 13 is a graph showing a velocity distribution of the follower of the auto-press; and

Fig. 14 is a side view showing a variation of the driving lever.

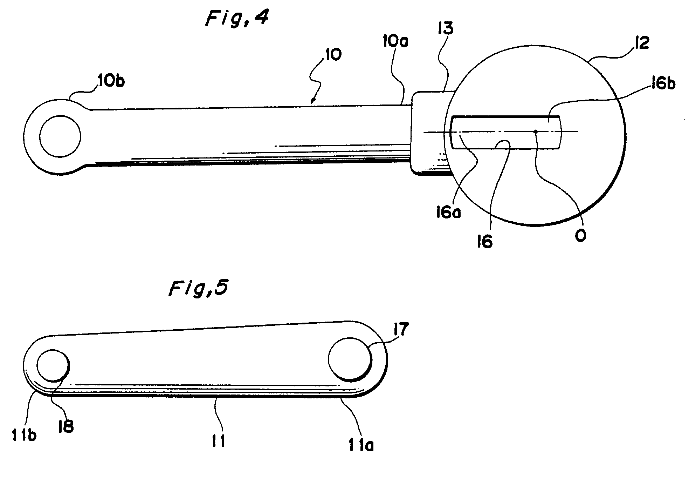

As shown in Fig. 4, 5 and 6, a force multiplier according to an embodiment of the present invention is substantially composed of two levers, namely a driving lever 10 and a driven lever 11. The driving lever 10 has a circular disk 12 having a relatively large radius. The circular disk 12 is connected to one end 10a of the driving lever 10, via a connection portion, to permit the lever 10 to extend outward therefrom in a radial direction thereof.

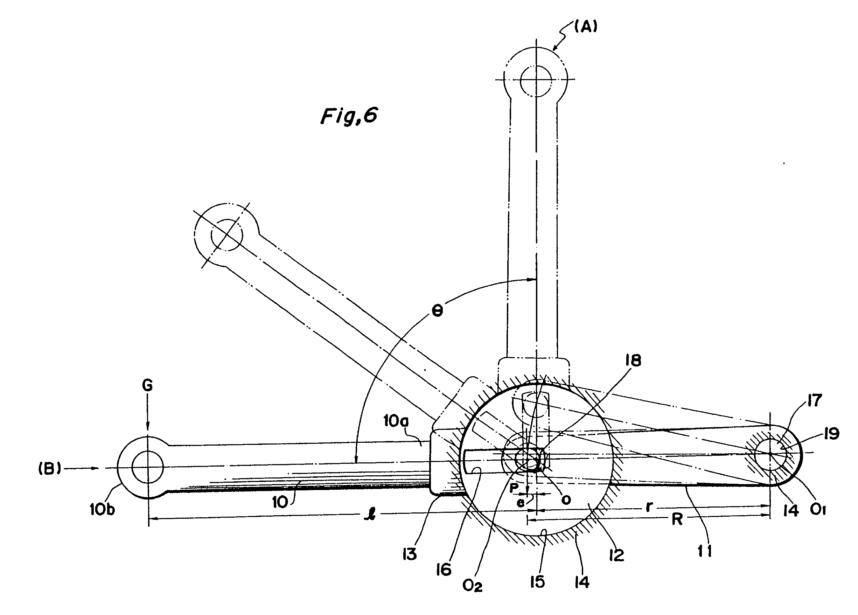

This circular disk 12, as shown in Fig. 6, is rotatably received in an aperture 15 defined in a frame 14 to provide a pivot for pivotal movement of the driving lever 10 in a plane parallel to the lengthwise direction thereof. A groove 16 is provided on the front side of the circular disk 12 in a radial direction thereof. The groove 16 constitutes a guide means. The outer end 16a thereof is located near the outer periphery of the circular disk 12 and the inner end 16b extends a short distance in the lengthwise direction thereof through the center of pivot of the driving lever 10, namely, the center O of the circular disk 12. It is to be noted that the lengthwise direction of the groove 16 is not necessarily coincided with that of the driving lever 10 although the both are formed to coincide with each other in this embodiment.

The driven lever 11 which constitutes the force multiplier together with the driving lever 10 has a pivot 17 at one end portion 11a thereof which projects in a direction perpendicular to the lengthwise direction of the driven lever 11 and has a pin 18 projecting at the other end portion 11b thereof perpendicularly to the lengthwise direction of the driven lever 11.

As shown in Fig. 6, the pivot 17 of the driven lever 11 is rotatably received in an aperture 19 in the frame 14 and the pin 18 is slidably engaged in the groove 16 of the circular disk 12. Namely, the pin 18 constitutes a follower defined in the claim.

The swinging radius R of the driven lever 11 defined in terms of the distance between the center $O_1$ of the pivot 17 and the center $O_2$ of the pin 18 is so determined as to be greater than the distance r between the center $O_1$ of the pivot 17 and the center O of pivot of the driving lever 10 by a predetermined short distance e, i.e., $R = r + e$.

And, the angle θ through which the driving lever 10 should be driven repeatedly is so set to an angle determined by the farthest position A at which the pin 18 is located at the outer end 16a of the groove 16 and the nearest position B at which the center $O_2$ of the pin 18 approaches the center O of the circular disk 12 by the predetermined short distance e.

As clearly understood from the foregoing, it becomes possible to make the center $O_2$ of the pin 18 as the follower approaches the center O of pivot of the driving lever 10 by an extremely short distance e. The leverage ratio obtained when the pin 18 attains the nearest position B is equal to l/e, wherein l is the length of the driving lever 10 and the force P generated as the output of the device on the pin 18 as the follower is given by the equation $P = (l/e) \cdot G$, wherein G is a driving force applied to the other end 10b of the driving lever 10.

Since it is possible to make the short distance e smaller to a degree almost equal to zero, the output P obtained becomes very large. For example, in the case where e is 3 mm, the length l of the driving lever 10 is 720 mm and G is 50 Kg, the output obtained is 12 tons and the leverage ratio at that time is 240.

The reasons why such a large leverage ratio having been never considered in the prior art can be obtained will be hereinafter explained in a different point of view.

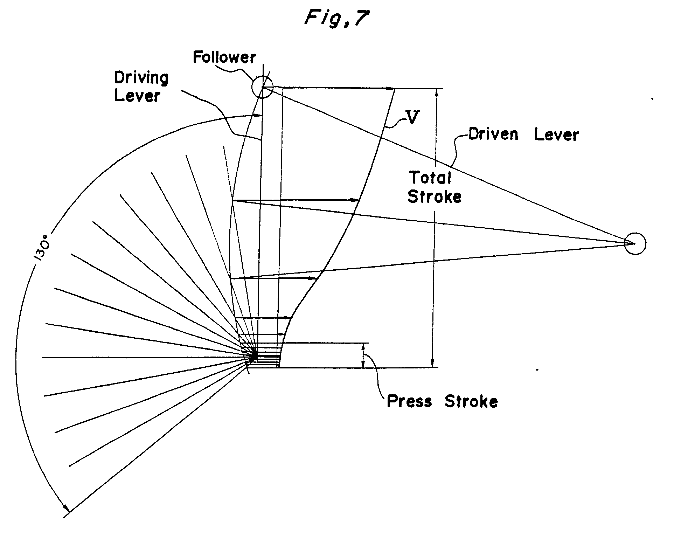

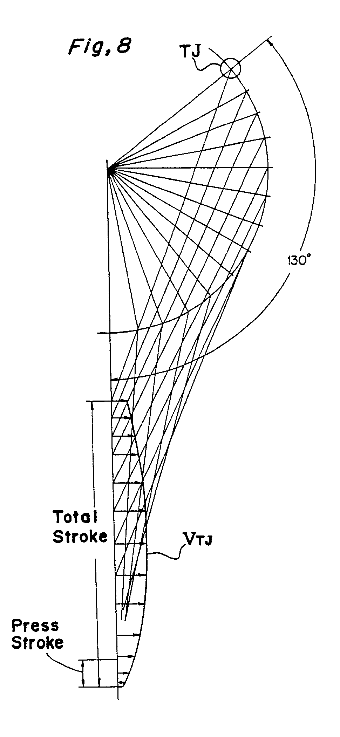

Fig. 7 shows the velocity distribution V of the pin 18 as the follower obtained according to the present invention and Fig. 8 shows the velocity distribution $V_{TJ}$ of the slider of the press having the toggle-joint mechanism shown in Fig. 2. These velocity distributions V and $V_{TJ}$ are obtained under the same conditions for the purpose of comparison, wherein the angle of the pivotal motion of the driving lever is equal to 130°, the stroke of the follower is set equal and each driving lever is driven at a uniform and equal velocity.

It is to be noted that the velocity in the range of the press stroke obtained according to the present invention is extremely smaller than that of the slider of the conventional press as is clear from the comparison of Fig. 7 with Fig. 8. Since the output P and the velocity V are in inverse proportional relation to each other as mentioned above, it may be clearly understood that an amazingly large output is obtained according to the present invention as compared with that of the press of toggle-joint type.

Furthermore, it is to be noted that the follower can be moved at high velocity from the upper end of the whole stroke thereof to the press stroke thereof and can be decelerated rapidly as it approaches the press stroke. Accordingly, if the force multiplier according to the present invention is applied to the press, a favorable velocity distributions of the slider thereof can be obtained because the slider can be moved up and down through almost all the stroke thereof except the press stroke and the work can be pressed quietly at very low velocity with very high press force.

A hand-operated press employing the force multiplier according to the present invention will now be disclosed.

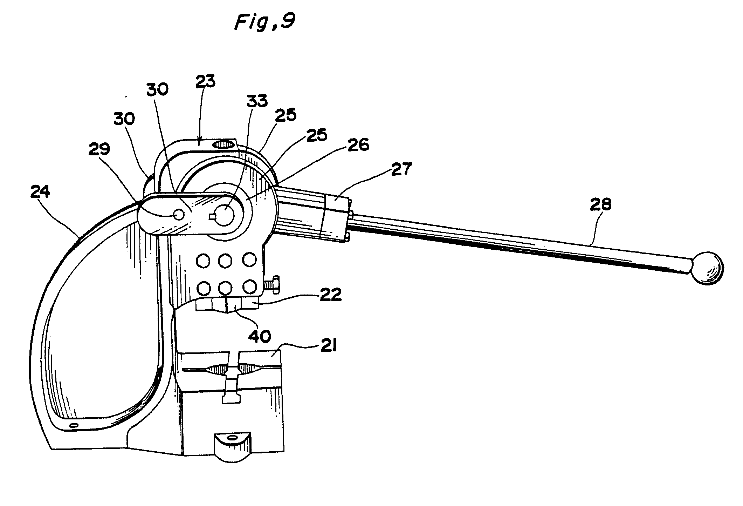

As shown in Fig. 9, the hand-operated press is provided with a body-frame 24 having a bed 21 for the support of a lower die (not shown) and an upper block 23 for guiding the slider 22 for the support of an upper die (not shown) in a vertical direction, with a driving lever 28 connected via a connecting means 27, to a pair of circular disks 26 wich are supported rotatably on a pair of side walls 25 as the pivot of the driving lever 28 and with a pair of driven lever 30 mounted pivotably on the side walls 25 by a pin shaft 29.

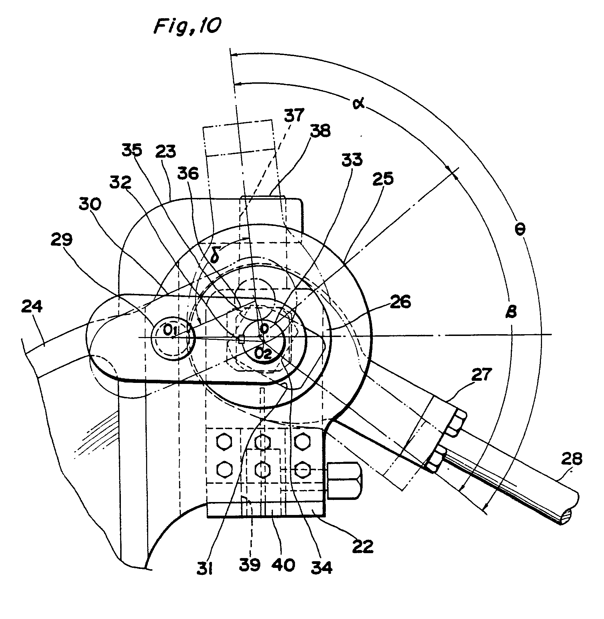

As best shown in Fig. 10 more specifically, there is provided a slot 31 in a radial direction of the circular disk 26, in which a square metal 34 is engaged slidably. The square metal 34 is coupled at the center thereof to a pin shaft 33 by a key 32 for maintaining the both not rotatable with each other. The pin shaft 33 has a sufficient length to be connected to the other driven lever 30 and another square metal 35 is coupled to the middle portion of the pin shaft 33. This square metal 35 is engaged in a square hole 36 provided passing through the upper portion of the slider 22 in a direction perpendicular to the lengthwise direction thereof. The width in the longitudinal direction of the square hole 36 is set equal to that of the square metal 35, but the width in the transversal direction thereof is set larger than that of the square metal 35 so as to allow the slide movement of the square metal 35 as the pin shaft 33 is moved along the circular arc locus thereof.

Accordingly, the slider 22 can move up and down following only a longitudinal component of the circular arc movement of the pin shaft 33 as the follower. The slider 22 has a guide rod 38 being engaged in a guide hole 37 formed in a vertical direction in the upper block 23 of the body frame 24 and a pair of convex guide means 40 of a triangular section engaged in a pair of guide groove 39 formed inside of the lower portion of the side walls 25 in the vertical direction. With the aid of these upper and lower guide means, the slider 22 is guided smoothly in the vertical direction without causing any axial deviation.

Upon operation of the hand-operated press mentioned above, the slider 22 is moved downwardly at high velocity by a distance almost equal to 80% of the total stroke thereof when the driving lever 28 is operated to swing through an angle α almost equal to 40% of the total angle of the pivotal movement thereof and, then the slider 22 is decelerated rapidly to a low velocity and is moved downwardly the rest of the total stroke almost equal to 20% thereof during an angle β almost equal to 60% of the total angle. At that time, the upper die mounted on the slider 22 presses the work on the bed 21 with the multiplied force.

As mentioned above, a very high capacity of the order of 10 to 20 tons can be obtained easily in the hand-operated press of this type.

Considering the slide resistivity of the square metal 34, it is desirable to maintain the angle δ, defined between the center line in the lengthwise direction of the driving lever 28 and the center line in the lengthwise direction of the driven lever equal to or larger than 105° all over the pivotal movement of the driving lever 28. This assures a smooth slide movement of the square metal 34 along the slot 31 and therefore, a smooth up and down movement of the slider 22.

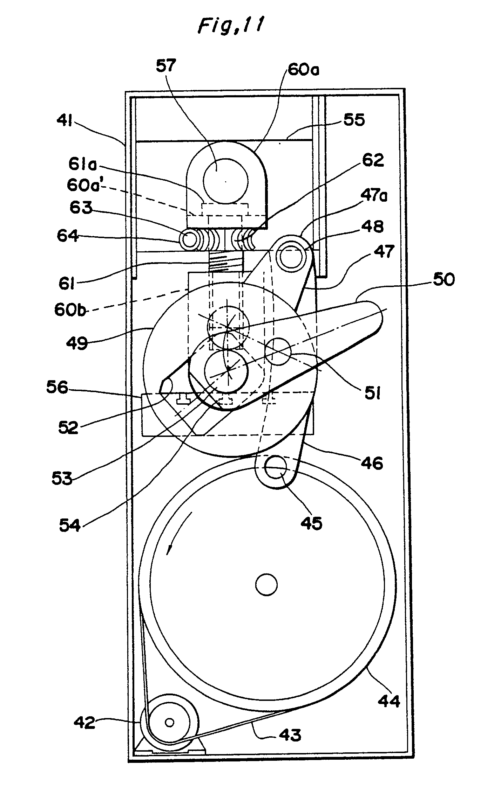

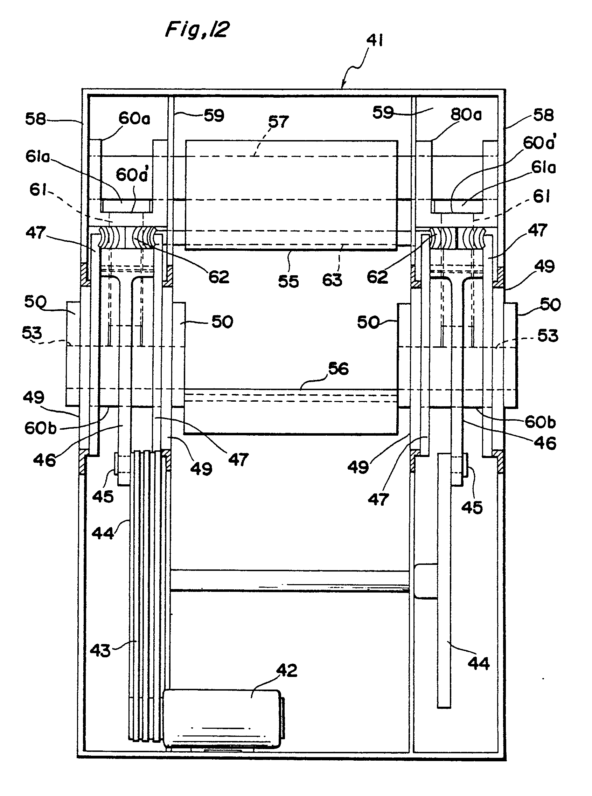

Fig. 11 and Fig. 12 show the interior structure of a press with driving motor equipped the force multiplier according to the present invention. Fig. 11 is a right hand side view thereof and Fig. 12 is a front view thereof.

In this case, there is provided an electric motor 42 on a bottom portion of box-like body frame 41. The electric motor 42 drives via belts 43 a crank disk 44 of a relatively large radius. A crank pin 45 fixed to the crank disk 44 at the outer peripheral portion thereof is connected to a connecting pin 48 by a connecting rod 46, which is fixed to a free end 47a of a driving lever 47. The driving lever 47 is driven to and fro once for each complete rotation of the crank disk 44.

The force multiplier itself employed in this press is substantially the same as of mentioned above. Reference numeral 49 is a circular disk having a relatively large radius, reference numeral 50 is a driven lever supported pivotably on the body frame by a pivot 51, reference numeral 52 is a groove provided on the circular disk 49 in a radial direction thereof, reference numeral 53 is a pin shaft as the follower, reference numeral 54 is a square metal engaged slidably in the groove 52, reference numeral 55 is a slider and reference numeral 56 is a bed.

The slider 55 is supported by a supporting rod 57 passing therethrough in a horizontal direction and each end of the supporting rod 57 is connected to an upper slide block 60a engaged slidably in a vertical direction between a pair of side walls 58 and 59. Therefore, when the upper slide block 60a slides in the vertical direction, the slider 55 is moved in the vertical direction together with the upper slide block 60a. Under the upper slide block 60a, there is provided a lower slide block 60b by a connecting shaft 61 having a head portion 61a supported between the supporting rod 57 and the bottom surface 60a' of the upper slide block 60a and a male threaded portion at the lower part thereof which is engaged with a female threaded hole provided in the lower slide block 60b. The lower slide block 60b is supported by the pin shaft 53 and, therefore, the lower slide block 60b, the connecting shaft 61 and the upper slide block 60a constitute a connecting rod means which connects the pin shaft 53 with the supporting rod 57 for the adjustment of the distance therebetween. A worm wheel 63 is fixed coaxially to the upper side of the connecting shaft 61. The worm wheel 62 is meshed with a worm 64 fixed to one end of a common worm shaft 63. When the worm 64 is driven in one direction, the connecting shaft 61 is rotated around the axis thereof. As a result of the rotation of the connecting shaft 61, the distance between the pin shaft 53 and the supporting rod 57 varies and then the height of the slider 55 against the bed 56 is adjusted to a desirable height.

As clearly shown in Fig. 12, it is desirable, for the purpose of increasing the intensity of the press, to use a pair of driving levers and a pair of driven levers at each side of the press.

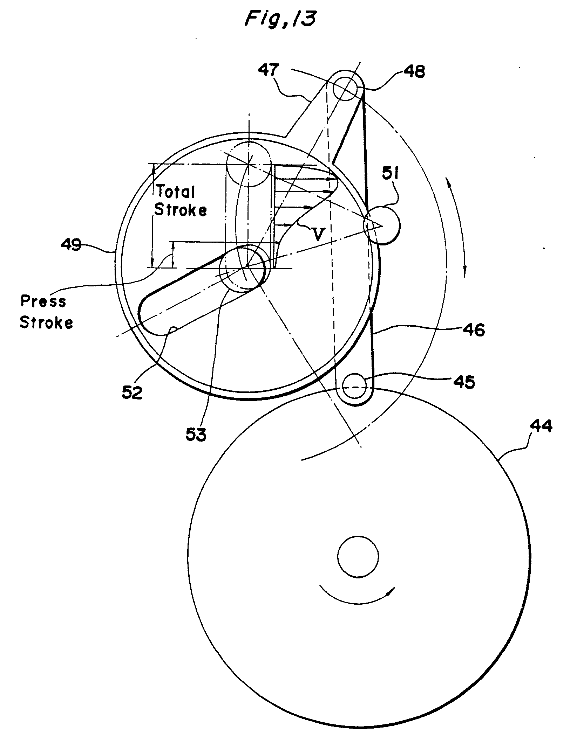

As shown in the velocity distribution V of the pin shaft as the follower in Fig. 13, velocities at the press stroke are reduced extremely when compared with that of the crank press shown in Fig. 1 or with that of the toggle-joint press shown in Fig. 2.

Moreover, when the force multiplier is applied to the auto-driven press, according to a prototype of the press, the volume of the press having a capacity of 100 tons is as small as 1600 × 700 × 1150 ($mm^3$) which is about one tenth of the volume of the conventional crank press mentioned above and the area for the installation of the present press is reduced to about one fifth of that of the conventional press.

In Fig. 13, the same reference numerals as in Fig. 12 are used to designate like parts.

Further, it is to be noted that the distance between the height to which an input is applied and the height from which an output is obtained can be reduced to almost zero, since it is possible to minimize the distance between the upper surface of the bed 56 and the axis of the circular disk 49.

This assures a high rigidity of the press and also a high working accuracy. In a conventional crank press of capacity 100 tons, the distance between the upper surface of the bed and the axis of the crank shaft is very large, for example, about 1500 mm, and therefore the rigidity of the frame is lowered and the working accuracy of the press is lowered.

Although the circular disk 12, 26 or 49 itself is pivotably mounted on the frame as a pivot shaft in the embodiments mentioned above, other structures are possible.

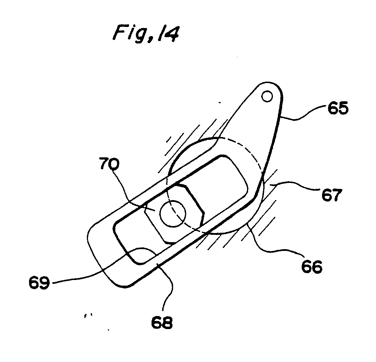

For instance, a driving lever 65 shown in Fig. 14 has a pivot shaft 66 supported rotatably on a frame 67 and the pivot shaft 66 has a projection 68 at one end thereof which is elongated outwardly in a radial direction of the pivot shaft 66. A groove 69 is provided on the projection 68 along the lengthwise direction thereof, in which a follower 70 is engaged slidably.

Also, a variety of the guide means known to those skilled in the art are employable as the guide means according to the present invention other than the groove 16, 52 or slot 31 disclosed above.

It should also be appreciated that the foregoing is a description of embodiments of the present invention is given by way of example.

**Claims**

1. A press incorporating a force multiplier comprising

a driving member (10) pivotally mounted on a supporting structure (14),

a guide (16) rotatable with the pivot of the driving member (10), and extending outwardly from the axis thereof,

a follower (18) arranged to run on the guide (16),

a driven member (11) pivotally mounted on the supporting structure and connected to the follower (18), the distance from the pivot axis of the driven member (11) to the centre of the connection between the follower and the driven member exceeding the distance between the driven and driving pivot axes such that when the driving member is driven through a predetermined angle, the follower is moved between a farthest position at which the follower is located farthest from the centre of pivot of the driving member and a nearest position at which the centre of the connection between the follower and the driven member is closest to the driving member's pivot axis, whereby the guide passes through the pivot axis of the driving member (10), and the distance from the pivot axis of the driven member to the centre of the connection between the follower and the driven member exceeds the distance between the driven and driving axes by a sufficiently small amount that as the follower approaches the nearest position, part of the follower running on the guide passes through the pivot axis of the driving member, and the driven member is decelerated rapidly as it approaches the nearest position.

2. A press according to claim 1 wherein the pivot of the driving member (10) comprises a circular disk (12) rotatably supported on the supporting structure (14).

3. A press according to claim 2, wherein the supporting structure defines a circular cavity into which the circular disk fits, and is thereby rotatably supported as the pivot of the driving lever.

4. A press according to claim 1 wherein the guide is provided on a portion elongated from the pivot of the driving member (10) in at least one radial direction thereof by a distance larger than the stroke of the follower (18).

5. A press according to claim 4, wherein said portion is formed as a circular disk coaxial with the pivot of the driving lever.

6. A press according to any one of claims 2 to 5 wherein the guide means is a groove or a slot extending in a radial direction of said portion or disk.

7. A press according to claim 6, wherein the follower is a pin engaged in the groove or the slot.

8. A press according to claim 6, wherein the follower is a square metal peg (70) slidably engaged in the groove or the slot and the square metal peg is connected to the driven member through a pin.

9. A press according to any one of the preceding claims wherein the driving and driven members are levers.

10. A press according to any one of the preceding claims wherein the driving member is constrained to be movable to and fro through an arc which is less than a semicircle.

**Patentansprüche**

1. Presse mit einem Kraftverstärker, bestehend aus

einem Antriebsteil (10), das auf einer Stützkonstruktion (14) schwenkbar gelagert ist,

einer Führung (16), die mit dem Gelenkzapfen des Antriebsteils (10) verdrehbar ist und sich von dessen Achse nach außen erstreckt,

einem zu einer Bewegung auf der Führung (16) angeordneten Nachläufer (18),

einem angetriebenen Bauteil (11), das auf der Stützkonstruktion schwenkbar gelagert und mit dem Nachläufer (18) verbunden ist, wobei der Abstand der Schwenkachse des angetrieben Bauteils (11) vom Zentrum der Verbindung zwischen dem Nachläufer und dem angetriebenen Bauteil größer ist als der Abstand zwischen den Schwenkachsen des Antriebsteils und des angetriebenen Bauteils, so daß, wenn das Antriebsteil über einen bestimmten Winkel angetrieben wird, der Nachläufer zwischen einer entferntesten Position, in der er vom Schwenkzentrum des Antriebsteils am weitesten weg angeordnet ist, und einer nächstliegenden Position bewegt wird, in der das Zentrum der Verbindung zwischen dem Nachläufer und dem angetriebenen Bauteil der Schwenkachse des Antriebsteils am nächsten liegt, wobei die Führung durch dei Schwenkachse des Antriebsteils (10) hindurchgeht und der Abstand der Schwenkachse des angetriebenen Bauteils vom Zentrum der Verbindung zwischen dem Nachläufer und dem angetriebenen Bauteil den Abstand zwischen den Schwenkachsen des Antriebsteils und des angetriebenen Bauteils um einen hinreichend kleinen Beträg übersteigt, damit, wenn sich der Nachläufer der nächstliegenden Position nähert, ein Teil des sich auf der Führung bewegenden Nachläufers durch die Schwenkachse des Antriebsteils hindurchgeht und das angetriebene Bauteil rasch abgebremst wird, wenn es sich der nächstliegenden Position nähert.

2. Presse nach Anspruch 1, wobei der Gelenkzapfen des Antriebsteils (10) aus einer Kreisscheibe (12) besteht, die in der Stützkonstruktion (14) drehbar abgestützt ist.

3. Presse nach Anspruch 2, wobei die Stützkonstruktion einen kreisförmigen Hohlraum begrenzt, in den die Kreisscheibe eingesetzt ist, die dadurch als Gelenkzapfen des Antriebshebels drehbar abgestützt ist.

4. Presse nach Anspruch 1, wobei die Führung auf einem Bereich des Gelenkzapfens des Antriebsteils (10) angeordnet ist, der sich zumindest in einer radialen Richtung desselben über eine Entfernung erstreckt, die größer ist als der Hub des Nachläufers (18).

5. Presse nach Anspruch 4, wobei der besagte Bereich als Kreisscheibe ausgebildet ist, die zu dem Gelenkzapfen des Antriebshebels koaxial ist.

6. Presse nach einem der Ansprüche 2 bis 5, wobei die Führung eine Nut oder ein Schlitz ist, die sich in dem besagten Bereich oder in der Scheibe in radialer Richtung erstreckt.

7. Presse nach Anspruch 6, wobei der Nachläufer ein in die Nut oder den Schlitz eingreifender Stift ist.

8. Presse nach Anspruch 6, wobei der Nachläufer ein quadratischer Metallzapfen (70) ist, der in die Nut oder den Schlitz verschiebbar eingreift und mit dem angetriebenen Bauteil durch einen Stift verbunden ist.

9. Presse nach einem der vorhergehenden Ansprüche, wobei das Antriebsteil und das angetriebene Bauteil Hebel sind.

10. Presse nach einem der vorhergehenden Ansprüche, wobei das Antriebsteil zu einer Hin- und Herbewegung über einen Kreisbogen beschränkt ist, der kleiner ist als ein Halbkreis.

**Revendications**

1. Presse contenant un intensificateur de force comprenant:

un organe menant (10) monté pivotant sur une structure de support (14),

un guide (16) rotatif avec le pivot de l'organe menant (10) et s'étendant vers l'extérieur de son axe,

un suiveur (18) agencé pour se déplacer sur le guide (16),

un organe mené (11) monté pivotant sur la structure de support et connecté au suiveur (18), la distance entre l'axe de pivotement de l'organe mené et le centre de la connexion entre le suiveur et l'organe mené dépassant la distance entre les axes de pivotement des organes mené et menant de manière que lorsque l'organe menant est entraîné sur un angle prédéterminé, le suiveur soit déplacé entre une position très éloignée à laquelle le suiveur est le plus éloigné du centre du pivot de l'organe menant et une position très proche à laquelle le centre de la connexion entre le suiveur et l'organe mené est très proche de l'axe de pivotement de l'organe menant, ainsi le guide passe par l'axe de pivotement de l'organe menant (10) et la distance entre l'axe de pivotement de l'organe mené et le centre de la connexion entre le suiveur et l'organe mené dépasse la distance entre les axes mené et menant d'une quantité suffisamment faible pour que tandis que le suiveur s'approche de la position la plus proche, une partie du suiveur passant sur le guide passe par l'axe de pivotement de l'organe menant, et l'organe mené est rapidement décéléré lors de sont approche de la position la plus proche.

2. Presse selon la revendication 1 où le pivot de l'organe menant (10) comprend un disque circulaire (12) supporté rotatif sur la structure de support (14).

3. Presse selon la revendication 2 où la structure de support définit une cavité circulaire dans laquelle s'adapte le disque circulaire, et est ainsi supportée rotative en tant que pivot du levier d'entraînement.

4. Presse selon la revendication 1 où le guide est prévu sur une portion allongée à partir du pivot de l'organe menant (10) dans au moins une direction radiale de celui-ci sur une distance plus importante que la course du suiveur (18).

5. Presse selon la revendication 4 où ladite portion est formée en tant que disque circulaire coaxial avec le pivot du levier d'entraînement.

6. Presse selon l'une quelconque des revendications 2 à 5 où le moyen de guidage est une gorge ou une fente s'étendant dans une direction radiale de ladite portion ou disque.

7. Presse selon la revendication 6 où le suiveur est une broche en engagement dans la gorge ou la fente.

8. Presse selon la revendication 6 où le suiveur est une cheville carrée en métal (70) en engagement coulissant dans la gorge ou la fente et la cheville carrée en métal est connectée à l'organe mené par une broche.

9. Presse selon l'une quelconque des revendications précédentes où les organes menant et mené sont des leviers.

10. Presse selon l'une quelconque des revendications précédentes où l'organe menant est forcé à être mobile vers l'avant et vers l'arrière sur un arc qui est plus petit qu'un demi-cercle.

Fig,2
Fig,1
TJ
$V_{II}$
$V_{I}$
Total
Stroke
Press Stroke
2
1

Fig. 3

ℓ
4
3
5
e
Total Stroke
Press Stroke
4

Fig,4
10b
10
10a
13
12
16b
16a
16
0

Fig,5
17
11b
18
11
11a

Fig,6
(A)
(B)
G
θ
ℓ
r
R
e
P
o
O1
O2
10
10a
10b
11
12
13
14
15
16
17
18
19

*Fig,7*

Follower
Driving Lever
V
Driven Lever
Total Stroke
130°
Press Stroke

Fig, 8
TJ
130°
Total
Stroke
VTJ
Press
Stroke

Fig,9

23
30
33
25
30
25
26
29
27
24
28
22
40
21

Fig,10
α
θ
β
δ
37
38
35
23
36
33
32
25
30
29
26
24
O1
O
O2
27
28
22
31
39
40
34

Fig,11

57
60a
41
55
61a
60a'
62
63
47a
64
48
47
61
50
60b
49
51
56
52
53
46
54
45
44
42
43

*Fig. 12*

41
58
60a
59
57
59
80a
58
60a'
61a
60a'
61a
61
61
47
62
55
63
62
47
49
50
50
50
50
53
53
56
49
60b
60b
46
46
47
49
49
47
45
45
44
43
42
44

Fig,13

47
48
51
Total
Stroke
V
49
Press
Stroke
46
45
52
53
44

Fig, 14

65
70
67
66
69
68